# EUROPÄISCHE PATENTSCHRIFT

(11) **EP 0 463 347 B1**
(45) Veröffentlichungstag und Bekanntmachung des Hinweises auf die Patenterteilung: **20.04.1994**
(21) Anmeldenummer: 91107921.8
(22) Anmeldetag: 16.05.1991
(51) Int. Cl.: B23B 31/16, B23B 5/16, B23D 33/02

(54) **Maschine zum Abstechen von Rohren und gegebenenfalls Anfasen der hierbei gebildeten Rohrstirnkanten**
Machine for cutting-off tubes and at the same time chamfering the formed tube ends
Machine à tronçonner des tubes et en même temps chamfreiner les extrémités ainsi obtenues

(30) Priorität: 27.06.1990 DE 4020435
(43) Veröffentlichungstag der Anmeldung: 02.01.1992
(73) Patentinhaber: MASCHINENFABRIK REIKA-WERK GmbH, D-58099 Hagen (DE)
(72) Erfinder: Braun, Hans, Ing., W-5800 Hagen-Kabel (DE); Mohn, Gerhard, W-5275 Bergneustadt (DE)
(74) Vertreter: Rehders, Jochen, Dipl.-Ing.

(56) Entgegenhaltungen:
- DE-A- 3 215 899
- DE-A- 3 612 960
- US-A- 1 400 306
- US-A- 3 791 659
- US-A- 4 469 288

## Beschreibung

Die Erfindung betrifft eine Maschine zum Abstechen von Rohren und ggf. Anfasen der hierbei gebildeten Rohrstirnkanten mit einem Abstechkopf zum Einspannen eines Rohrendes aus einer mittels einer Hydraulik-Kolben-Zylinder-Einheit axial verschiebbaren Druckhülse mit radialen Keilflächen und darin konzentrisch angeordneten, aixal unverschiebbaren, mittels komplementärer Keilflächen radial zustellbaren Spannbacken, mit einer drehbaren Planscheibe zur Aufnahme von wenigstens zwei radial gegenüberliegenden und radial zustellbaren Abstechwerkzeugen und/oder ggf. Faswerkzeugen und ggf. mit einem Abgreifer zum Halten des abzustechenden Rohrteils aus mittels einer Hydraulik-Kolben-Zylinder-Einheit betätigbaren Spannbacken.

Eine derartige Maschine ist in der DE-OS 36 12 960 beschrieben. Bei dieser Maschine bildet die Druckhülse mit den radialen Keilflächen einen Ringkolben der Hydraulik-Kolben-Zylinder-Einheit, der wechselseitig zum Spannen bzw. Lösen der Spannbacken mit Hydraulikdruck beaufschlagt wird. Ein Teil der Innenbohrung der Druckhülse ist kegelig ausgeführt und mit radialen Nuten versehen. Diese Nuten bilden die radialen Keilflächen in der Druckhülse und wirken mit entsprechenden komplementären Keilflächen der radial zustellbaren Spannbacken zusammen. Die Nuten bilden gleichzeitig eine Verdrehsicherung für die Spannbacken. Obwohl sich die bekannte Maschine grundsätzlich bewährt hat, hat die Erfahrung gezeigt, daß sich die beschriebenen Nuten nur dann mit einem angemessenen Aufwand fertigen lassen, wenn sie verhältnismäßig kurz sind, wodurch die Führung der Spannbacken unter Umständen unzureichend wird.

Des weiteren legt die Druckhülse beim Spannen und Lösen stets den gesamten vorgegebenen Weg zurück, unabhängig davon, ob ein großes Spiel zwischen dem abzustechenden Rohr und den Spannbacken erforderlich ist oder nicht.

Schließlich können die geraden Keilflächen in den Führungsnuten zu Kantenpressungen auf dem einzuspannenden Rohr oder in den Führungen führen, die entweder die Rohroberfläche beschädigen oder die Keilflächen, wenn aufgrund der unvermeidbaren Toleranzen keine satte Anlage der Keilflächen gegeben ist.

Der Erfindung liegt die Aufgabe zugrunde, die Maschine der eingangs erwähnten Art so zu verbessern, daß eine genaue und kantenpressungsfreie Führung der Spannbacken auf den Keilflächen erreicht wird.

Ausgehend von dieser Aufgabenstellung wird bei einer Maschine der eingangs erwähnten Art vorgeschlagen, daß erfindungsgemäß die Keilflächen der Druckhülse und die komplementären Keilflächen der Spannbacken aus mit ihren Achsen gegen die Achse der Druckhülse um den Keilwinkel geneigten Zylinderflächen gebildet sind.

Derartige Zylinderflächen lassen sich problemlos mit einer Drehmaschine oder einem Bohrwerk mit großer Genauigkeit herstellen, wobei sich die Führungslänge der Spannbacken dadurch verlängern läßt, daß jede Spannbacke zwei axial versetzte, mit zwei entsprechend komplementären Keilflächen in der Druckhülse zusammenwirkende, zwischen sich einen Freiraum bildende Keilflächen aufweisen kann.

Vorteilhafterweise kann der Durchmesser der Zylinderflächen kleiner als der Durchmesser der Außenoberfläche der Druckhülse sein. Vorzugsweise kann der Durchmesser der Zylinderflächen sogar kleiner als der kleinste Durchmesser der Keilflächen sein.

Auf diese Weise wird eine besonders gute Führung in axialer Richtung mit gleichzeitiger Verdrehsicherung in Umfangsrichtung erreicht, während sich die Spannbacken dennoch an kleine Winkelabweichungen bei der Bearbeitung anpassen können.

Ein Keilwinkel von 25° ergibt einerseits einen ausreichenden radialen Verstellweg im Verhältnis zum baulich unterbringbaren axialen Verstellweg der Druckhülse und erlaubt es andererseits, hohe Spannkräfte bei verhältnismäßig geringem Durchmesser des die Druckhülse axial verschiebbaren Ringkolbens zu erreichen, ohne daß die in den Keilflächen auftretenden Reibungskräfte die Spannkräfte beeinträchtigen. Um die Spannbacken über eine große Länge zu führen, können die Keilflächen im Bereich des Austritts des Rohrendes axial länger sein als die diesem Bereich entgegengesetzten Keilflächen. Des weiteren können die Spannbacken im Bereich der axial längeren Keilflächen auswechselbare, eine unterschiedliche, dem Durchmesser der einzuspannenden Rohrenden angepaßte radiale Dicke aufweisende Spannblöcke tragen. Auf diese Weise läßt sich die erfindungsgemäße Maschine zum Abstechen von Rohren unterschiedlichsten Durchmessers einsetzen, ohne an der Druckhülse und den Spannbacken selber etwas ändern zu müssen.

Werden zwischen den Spannbacken gewölbte Spreizfederblätter angeordnet, die die Spannbacken von innen gegen die Druckhülse pressen, bleiben die Spannbacken mit ihren zylindrischen Keilflächen stets in Kontakt mit den entsprechenden Keilflächen der Druckhülse. Diese Spreizfederblätter dienen auch als Rückholfedern für die Spannbacken beim Lösen derselben.

Zusätzlich können zwischen den Spannbacken und der Druckhülse zumindest im Bereich der kürzeren Keilflächen unter dem Keilwinkel geneigte Rückzugführungen angeordnet sein, die ein Kippen der Spannbacken verhindern, wenn ein sehr kurzes Rohrstück in den Spannblöcken eingespannt ist.

Die Hydraulik-Kolben-Zylinder-Einheit zum Verschieben der Druckhülse kann einen mit der Druckhülse verbundenen, doppelt wirkenden Ringkolben aufweisen, wobei die wirksame Fläche der ein Spannen der Spannbacken bewirkenden Kolbenseite größer sein kann als die wirksame Fläche der ein Lösen der Spannbacken bewirkenden Kolbenseite des Ringkolbens.

Vorzugsweise kann der ein Lösen der Spannbacken bewirkende Rückhub des Ringkolbens durch einen verstellbaren Anschlag begrenzt sein, der aus der Kolbenstange einer doppelt wirkenden Hydraulik-Kolben-Zylinder-Einheit bestehen kann.

Die Hydraulik-Kolben-Zylinder-Einheit für die Druckhülse kann über ein 4/3-Wegeventil angesteuert sein, von dem ein Eingang P mit einer Druckleitung, ein Ausgang T mit einer Rückleitung, ein Ausgang A über ein Rückschlagventil mit der eine größere wirksame Fläche aufweisenden Kolbenseite und diese über ein steuerbares Rückschlagventil mit einem dem kolbenstangeseitigen Zylinderraum abgewandten Zylinderraum des verstellbaren Anschlags sowie direkt mit dem kolbenstangenseitigen Zylinderraum des verstellbaren Anschlags verbunden und ein Ausgang B mit der eine kleinere wirksame Fläche aufweisenden Kolbenseite sowie mit dem Steuereingang des steuerbaren Rückschlagventils verbunden ist und der verstellbare Anschlag kann über ein 4/2-Wegeventil angesteuert sein, von dem ein Eingang P verschlossen, ein Ausgang T mit einer Rückleitung, ein Ausgang A mit dem dem kolbenstangenseitigen Zylinderraum abgewandten Zylinderraum verbunden und ein Ausgang B verschlossen sind.

Je nach Ansteuerung der als verstellbaren Anschlag wirkenden doppelt wirkenden Hydraulik-Kolben-Zylinder-Einheit fährt der Ringkolben bis zum Anschlag mit der Kolbenstange dieser Hydraulik-Kolben-Zylinder-Einheit zurück, wodurch der Rückhub begrenzt wird, oder er fährt bis zum Anschlag an sein Gehäuse, wodurch der maximal mögliche Rückhub zurückgelegt wird.

Die Erfindung wird nachstehend anhand eines in der Zeichnung dargestellten Ausführungsbeispiels erläutert, und es zeigen:
- Fig. 1: einen Längsschnitt durch einen Abstechkopf,
- Fig. 2: einen Längsschnitt durch eine Druckhülse,
- Fig. 3: eine Stirnansicht der Druckhülse,
- Fig. 4: einen Längsschnitt durch eine Spannbacke,
- Fig. 5: eine Stirnansicht der Spannbacke und
- Fig. 6: eine schematische Darstellung eines Hydraulikkreises zur Betätigung der Hydraulik-Kolben-Zylinder-Einheiten zum Spannen und Lösen der Spannbacken und zum Begrenzen der Öffnungsbewegung der Spannbacken.

Von einer Maschine zum Abstechen von Rohren ist nur ein Teil eines Gehäuses 1 dargestellt, mit dem einstückig eine Hauptbuchse 7 verbunden ist.

Die Hauptbuchse 7 weist einen radial vorstehenden Bund 15 auf, der mit einer Hochdruckdichtung 16 einen doppelt wirkenden Ringkolben bildet. Eine innere Bohrung 9 in der Hauptbuchse 7 geht über einen Absatz 10 in eine innere Bohrung 11 kleineren Durchmessers über. Im Bereich des Absatzes 10 ist eine Hochdruckdichtung 13 angeordnet. Die Bohrung 11 endet in einem weiteren Absatz 12, von dem eine schräg angeordnete Entlüftungsbohrung 14 in einen Stirnbereich der Hauptbuchse 7 führt. In diesem Stirnbereich ist eine weitere Hochdruckdichtung 17 angeordnet. Ein Anschlagflansch 19 ist in einer Eindrehung 21 des Gehäuses 1 befestigt. Der Anschlagflansch 19 greift mit einem zylindrischen Fortsatz 135 in die Bohrung 9 der Hauptbuchse 7 ein und ist dort mittels einer O-Ringdichtung 22 abgedichtet.

Ein Spannkolben 25 ist mittels eines Gleitringes 27 im zylindrischen Fortsatz 135 geführt und gegenüber diesem mittels einer Hochdruckdichtung 26 abgedichtet. Ein Bund 28 am Spannkolben 25 bildet einen Ringkolben, der mittels einer Hochdruckdichtung 29 in der Bohrung 9 der Hauptbuchse 7 abgedichtet geführt ist. Der Ringkolben 28 weist eine das Spannen bewirkende Kolbenseite 30 und eine das Lösen bewirkende Kolbenseite 31 auf. Die Kolbenseite 30 ist zu einem Zylinderraum 32 und die Kolbenseite 31 zu einem Zylinderraum 33 gerichtet.

Die wirksame Fläche der das Spannen bewirkende Kolbenseite 30 ist größer als die der das Lösen bewirkenden Kolbenseite 31.

Im Bereich des Zylinderraums 32 ist eine radiale Druckölzu- und -ableitung 34 angeordnet, während im Bereich des Zylinderraums 33 eine weitere radiale Druckölzu- und -ableitung 35 angeordnet ist. Beide Leitungen 34, 35 stehen mit nicht dargestellten, getrennten axialen Leitungen in Verbindung, die durch die Hauptbuchse 7 geführt sind, wie dies bezüglich einer Axialbohrung 85 dargestellt ist.

Das vordere Ende des Spannkolbens 25 bildet eine Druckhülse 36, die sich axial bis in den Bereich eines Gleitringes 39 erstreckt und dort geführt ist. Eine Paßfeder 41 läßt eine axiale Verschiebung in einer Keilnut 43 zu, sichert aber gleichzeitig den Spannkolben 25 mit der Druckhülse 36 gegen Verdrehen gegenüber der Hauptbuchse 7.

Die Druckhülse 36 am Spannkolben 25 weist drei gleichmäßig auf den Umfang verteilte hintere Keilflächen 37 und vordere Keilflächen 38 auf, die mit entsprechenden, komplementären hinteren Keilflächen 45 und vorderen Keilflächen 46 an drei Spannbacken 44 zusammenwirken. Zwischen der vorderen Keilfläche 46 und der hinteren Keilfläche 45 der Spannbacke 44 befindet sich ein Freiraum 47, der den axialen Abstand zwischen der hinteren Keilfläche 45 und der vorderen Keilfläche 46 bestimmt. Im Bereich der vorderen Keilfläche 46 einer jeden Spannbacke 44 ist ein auswechselbarer Spannblock 48 mittels einer Befestigungsschraube 49 befestigt. Diese Spannblöcke 48 sind in verschiedenen radialen Abmessungen vorhanden und dienen dazu, den Abstechkopf an unterschiedliche Rohrdurchmesser anzupassen. Zwischen den Spannbacken 44 sind gewölbte Spreizfederblätter 50 angeordnet, die sich an den Spannbacken 44 abstützen und diese radial nach auswärts drücken. Diese Spreizfederblätter 50 dienen als Rückholfedern für die Spannbacken 44, wenn sie durch Zurückfahren des Spannkolbens 25 und der Druckhülse 36 gelöst werden sollen. Die Spannbacken 44 sind mit geringem axialem Spiel zwischen einem Flansch an der Hauptbuchse 7 und einem zylindrischen Fortsatz 23 angeordnet und stützen sich beim Spannen mit ihrer Stirnseite am Flansch der Hauptbuchse 7 und beim Lösen mittels eines rückwärtigen Flansches 119 am zylindrischen Fortsatz 23 ab. Die Zwischenräume zwischen den Spannbacken 44 sind mittels Schutzblechsegmente 51 verschlossen. Eine Schmierölbohrung 52 führt von der hinteren Stirnseite des Anschlagflansches 19 bis in einen vorderen Bereich der Hauptbuchse 7 und von dort radial nach außen, um über Schmierölbohrungen 60 die Schmierölversorgung von auf einer Schiebebuchse 53 angeordneten Wälzlagern 76, 77 zu gewährleisten.

Die Schiebebuchse 53 weist einen Absatz 54 auf, der einen Zylinderraum 57 nach vorne begrenzt. Ein weiterer Absatz 55 in der Schiebebuchse 53 begrenzt einen Zylinderraum 59 für den gehäusefesten Ringkolben 15. Eine Hochdruckdichtung 56 dichtet einen Zylinderraum 58 gegenüber einem Ringkolben 71 ab, der mit seiner Innenbohrung auf der zylindrischen Hauptbuchse 7 geführt und mittels einer Hochdruckdichtung 72 abgedichtet ist. Eine O-Ringdichtung 61 sowie eine weitere, dazu axial versetzte O-Ringdichtung 62 dienen dazu, die Schmierölbohrungen 52, 60 nach außen hin abzudichten. Ein Flansch 63 ist mit der Schiebebuchse 53 verbunden und dieser gegenüber mittels einer O-Ringdichtung 65 abgedichtet. Im Flansch 63 ist des weiteren eine Hochdruckdichtung 66 angeordnet, die die Abdichtung gegenüber der Hauptbuchse 7 übernimmt. Ein Gleitring 67 übernimmt die Führung der Hauptbuchse 7 im Flansch 63.

Am entgegengesetzten, vorderen Ende der Schiebebuchse 53 ist ein Spannring 68 befestigt und ein Gleitring 70 übernimmt die Führung des vorderen Endes der Schiebebuchse 53 auf der Hauptbuchse 7. Mittels des Flansches 63 und des Spannrings 68 werden die Wälzlager 76,77 auf der Schiebebuchse 53 axial festgelegt und gehalten.

Der Ringkolben 71 weist eine Vorderseite 73 auf, die sich bis zu einem Anschlag 75 am gehäusefesten Ringkolben 15 bewegen kann. Des weiteren weist der Ringkolben 71 eine Rückseite 74 auf, deren Bewegung durch einen Anschlag 136 am Flansch 63 begrenzt ist. Mittels der Wälzlager 76, 77 ist eine Antriebsbuchse 78 auf der Schiebebuchse 53 drehbar gelagert. Diese Antriebsbuchse 78 ist an ihrem hinteren Ende mit einem Zahnkranz 79 versehen, in den ein nicht dargestellter Drehantrieb eingreift. Eine Radialdichtung 80 dichtet das vordere Ende der Antriebsbuchse 78 gegenüber dem Spannring 68 ab. Eine axiale Schmierölbohrung 81 in der Antriebsbuchse 78 führt Schmieröl von dem Bereich zwischen dem Wälzlager 76 und der Radialdichtung 80 in den Raum zwischen den beiden Wälzlagern 76, 77 zurück. Mit der Antriebsbuchse 78 ist eine im einzelnen nicht dargestellte, in der parallelen Patentanmeldung mit gleichem Datum derselben Anmelderin beschriebene, Planscheibe 82 verbunden, die ebenfalls nicht dargestellte radial gegenüberliegende und radial zustellbare Abstechwerkzeuge und/oder ggf. Faswerkzeuge trägt. Die Planscheibe 82 ist an der Antriebsbuchse 78 befestigt.Im Ringkolben 71 ist wenigstens eine Radialbohrung 84 angeordnet, die eine Radialbohrung 86 in der Hauptbuchse 7 mit dem Zylinderraum 57 verbindet. Die Radialbohrung 86 ist über die Axialbohrung 85 zur Stirnseite des Anschlagflanschs 19 geführt und dort mit einer Druckmittelleitung verbunden. Entsprechende Radialbohrungen 87 und 88 führen zu den Zylinderräumen 58 und 59 und sind gegenüber der Axialbohrung 85 versetzt ebenfalls zum Anschlagflansch 19 geführt und dort in ebenfalls nicht dargestellter Weise mit einer Druckmittelleitung verbunden. Auf der Antriebsbuchse 78 ist ein Zahnrad 90 über zwei Wälzlager 92, 93 drehbar gelagert. Radialdichtringe 95, 96 sorgen für eine Abdichtung des Zahnrades 90 gegenüber der Antriebsbuchse 78. An der vorderen Stirnseite des Zahnrades 90 ist ein kleines Kronenrad 98 befestigt. Das kleine Kronenrad 98 kämmt mit einem Kegelritzel 109 in der Planscheibe 82. Auf dem Zahnrad 90 ist ein Zahnrad 102 über zwei weitere Wälzlager 137, 138 drehbar gelagert. Mit dem Zahnrad 102 ist ein großes Kronenrad 103 einstückig hergestellt. Das große Kronenrad 103 befindet sich in Eingriff mit einem großen Kegelritzel 108 in der Planscheibe 82.

Die Zahnräder 90, 102 befinden sich in Eingriff mit einer nicht dargestellten, in der vorerwähnten Patentanmeldung derselben Anmelderin beschriebene Antriebsvorrichtung, die es gestattet, diese Zahnkränze unabhängig voneinander relativ zum Zahnkranz 79 zu verdrehen. Diese Drehung überträgt sich über das kleine Kronenrad 98 oder das große Kronenrad 103 auf das kleine Kegelritzel 109 oder das große Kegelritzel 108, die eine Gewindespindel 110 in Drehung versetzen. Die Drehung der Gewindespindel 110 bewirkt eine radiale Verschiebung von nicht dargestellten Abstechwerkzeugen und/oder ggf. Faswerkzeugen und damit die Bearbeitung eines im Abstechkopf eingespannten Rohrendes.

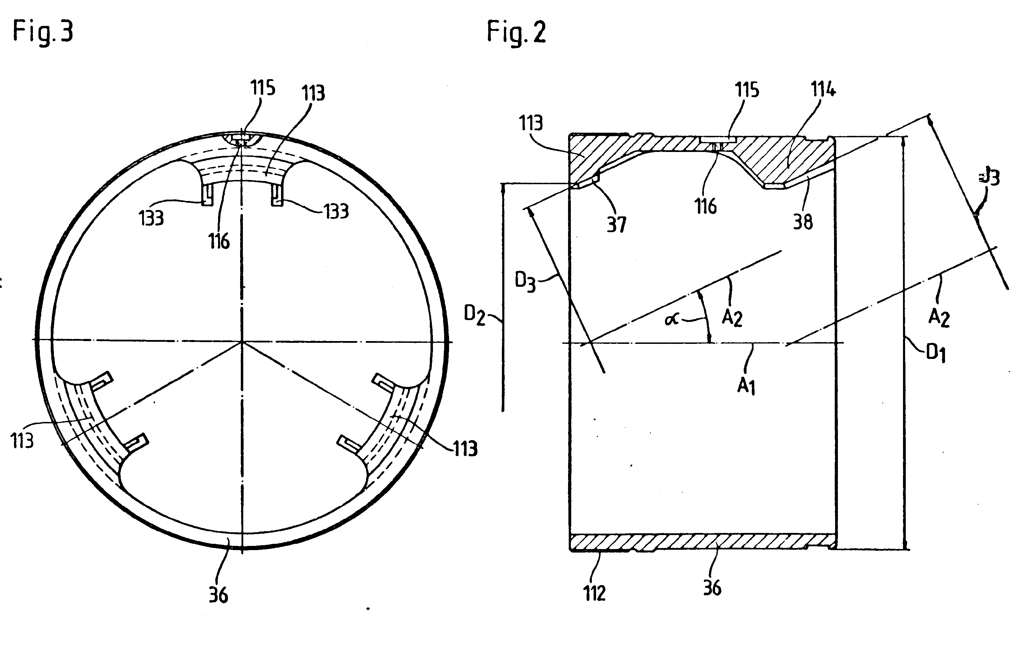

Wie sich aus Fig. 2 und 3 erkennen läßt, weist die Druckhülse 36 gleichmäßgig auf dem Umfang verteilt drei hintere, nach innen ragende radiale Vorsprünge 113 und drei entsprechende, axial versetzte vordere Vorsprünge 114 auf. Die hinteren radialen Vorsprünge 113 sind mit zylindrischen Keilflächen 37 versehen, die mit einem Durchmesser D₃ und mit ihrer Achse A₂ gegenüber der Achse A₁ der Druckhülse 36 um den Keilwinkel α geneigt hergestellte werden. die vorderen radialen Vorsprünge 114 weisen Zylinderflächen 38 mit demselben Durchmesser D₃ auf.

Der Durchmesser D₃ der Zylidnerflächen 37, 38 ist kleiner als der Außendurchmesser D₁ der Druckhülse 36 und vorzugsweise auch kleiner als der Durchmesser D₂ eines in die radialen Vorsprünge 113, 114 einbeschriebenen Zylinders.

Auf dem Außenumfang der Druckhülse 36 ist eine Aufnahme 115 für die Paßfeder 41 und eine Gewindebohrung 116 für eine Befestigungsschraube angeordnet.

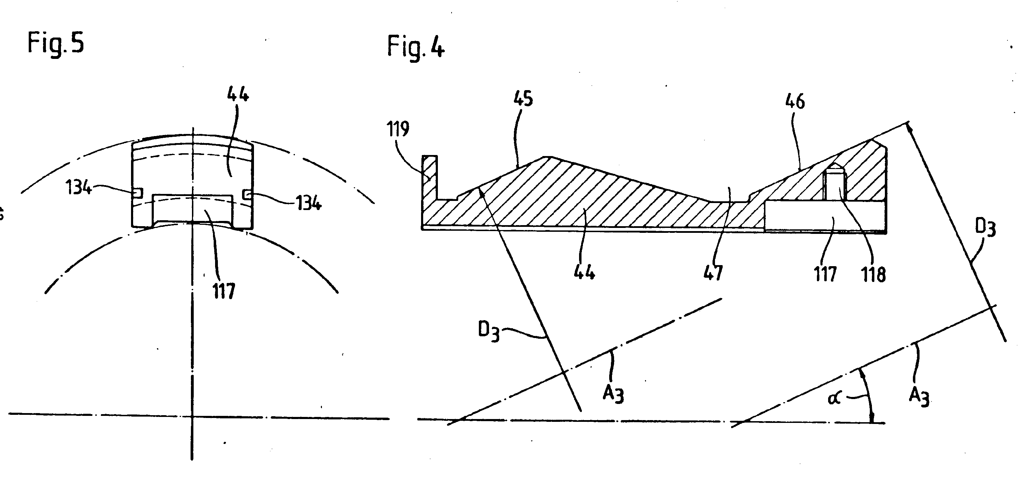

Die in Fig. 4 und 5 dargestellten Spannbacken 44 mit den zylindrischen Keilflächen 45, 46, die denselben, mit ihren Achsen A₃ gegenüber der Druckhülsenachse A₁ um den Keilwinkel geneigten Durchmesser D₃ aufweisen, sind mit einer Aufnahme 117 für die Spannblöcke 48 versehen. Zur Befestigung der auswechselbaren Spannblöcke 48 ist in jeder Spannbacke 44 eine Gewindebohrung 118 für Befestigungsschrauben angeordnet.

Am hinteren Ende einer jeden Spannbacke 44 ist ein radial vorstehender Flansch 119 angeordnet, der sich in der bereits beschriebenen Weise am zylindrischen Fortsatz 23 abstützt.

Zumindest im Bereich der hinteren Keilflächen 37 an der Druckhülse 36 und den komplementären hinteren Keilflächen 45 an jeder Spannbacke 44 können formschlüssige Rückzugführungen 133, 134 angeordnet sein, die ein Kippen der Spannbacken 44 verhindern sollen, wenn ein sehr kurzes Rohrstück am äußersten Ende der Spannbacken 44 eingespannt werden soll.

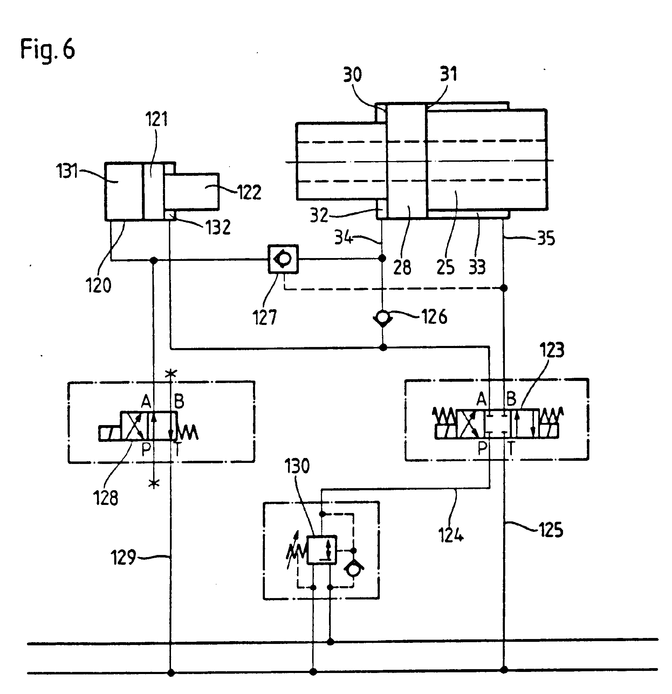

Aus Fig. 6 ergibt sich die Betätigung der Spannbacken 44 über die Durckhülse 36 und den Spannkolben 25.

Zu diesem Zweck ist ein 4/3-Wegeventil 123 vorgesehen, dessen Eingang P über eine Druckleitung 124 und ein Druckminderventil 130 mit Durckmittel beaufschlagt ist. Eine Rückleitung 125 ist mit einem Ausgang T des 4/3-Wegeventils 123 verbunden. Ein Ausgang A des 4/3-Wegeventils 123 ist über ein Rückschlagventil 126 mit der Druckölzu- und -ableitung 34 zum Zylinderraum 32 des Spannkolbens 25 verbunden. Des weiteren führt von hier aus eine Verbindung über ein steuerbares Rückschlagventil 127 zu einem Zylinderraum 131 eines Zylinders 120, der mit einem darin verschiebbar geführten Kolben 121 und einer herausgeführten Kolbenstange 122, die einen verstellbaren Anschlag für den Rückhub des Spannkolbens 25 darstellt.

Der Ausgang A des 4/3-Wegeventils 123 ist des weiteren direkt mit einem kolbenstangenseitigen Zylinderraum 132 des Zylinders 120 verbunden, während ein Ausgang B des 4/3-Wegeventils 123 mit der Druckölzu- und -ableitung 35 zum Zylinderraum 33 des Spannkolbens 25 verbunden ist. Ein 4/2-Wegeventil 128 ist mit seinem Ausgang A mit dem Zylinderraum 131 und mit seinem Ausgang T mit einer Rückleitung 129 verbunden. Die Ein- bzw. Ausgänge P, B sind verschlossen.

Um den Abstechkopf zu spannen, muß sich der Spannkolben 25 in Fig. 6 nach rechts bewegen. Zu diesem Zweck wird das 4/3-Wegeventil 123 so bewegt, daß der Eingangs P mit dem Ausgang A und der Ausgang B mit dem Ausgang T und damit der Rückleitung 125 in Verbindung stehen. Somit gelangt Druckmittel über das Druckminderventil 130, die Druckmittelleitung 124, das Rückschlagventil 126 in den Zylinderraum 32 sowie unter Umgehung des Rückschlagventils 126 direkt in den Zylinderraum 132. Da das 4/2-Wegeventil 128 so betätigt wurde, daß eine Verbindung zwischen dem Ausgang A und dem Ausgang T besteht, bewegt sich der Kolben 121 mit der Kolbenstange 122 nach links.

Um ein eingespanntes Rohrende zu lösen, muß der Spannkolben 25 nach links bewegt werden. Soll dieser nur einen kleinen Hub vollführen, um das eingespannte Rohr mit geringem Spiel zu umfassen, wird das 4/2-Wegeventil 128 in die dargestellte Stellung zurückbewegt, so daß es verschlossen ist, während das 4/3-Wegeventil 123 so betätigt wird, daß sich eine Verbindung zwischen dem Eingang P zum Ausgang B und vom Ausgang A zum Ausgang T ergibt. Nunmehr werden der Zylinderraum 33 und das steuerbare Rückschlagventil 127 mit Druckmittel beaufschlagt. Da sich das steuerbare Rückschlagventil 127 unter dem Einfluß des Drucks in der Druckölzu- und -ableitung 35 öffnet, kann Druckmittel von Zylinderraum 32 über das steuerbare Rückschlagventil 127 in den Zylinderraum 131 fließen und schiebt den Kolben 121 mit der Kolbenstange 122 nach rechts. Dabei fließt Druckmittel aus dem Zylinderraum 132 über das 4/3-Wegeventil 123 mit dem Ausgang A, der mit dem Ausgang T verbunden ist, in die Rückleitung 125 ab. Die Kolbenstange 122 bewegt sich so weit nach rechts, da dadurch der Weg des Spannkolbens 25 nach lings begrenzt wird. Die Kolbenstange 122 dient somit als Anschlag für die Bewegung des Spannkolbens 25, dessen Weg auf das notwendige Maß zum Lösen der Spannbacken beschränkt wird.

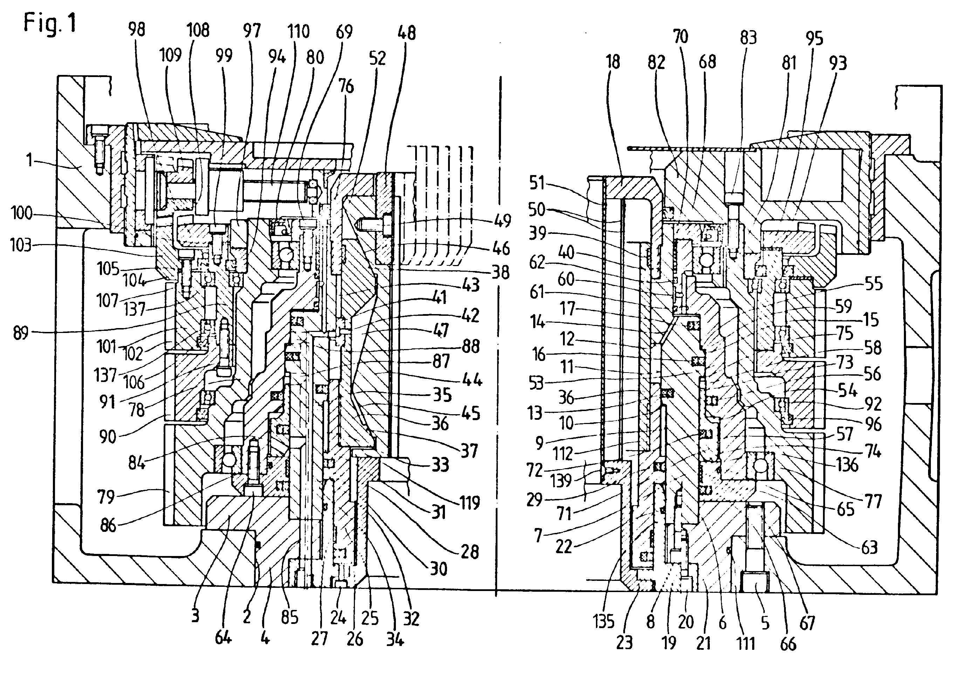

Soll der Spannkolben 25 den gesamten Rückweg zurücklegen, zum Beispiel um andere Spannbläcke 48 in die Spannbacken 44 einzusetzen, wird das Vier/Zwei-Wegeventil 128 so betätigt, daß eine Verbindung zwischen dem Ausgang A und dem Ausgang T und damit zur Rückleitung 129 hergestellt wird. Das Druckmittel im Zylinderraum 131 und im Zylinder 32 kann somit in die Rückleitung 129 abfließen, so daß der Kolben 121 mit der Kolbenstange 122 vor dem Spannkolben 25 zurückweicht, bis dieser am Ende seines Weges angelangt ist und an den in Figur 1 dargestellten zylindrischen Fortsatz 135 am Anschlagflansch 19 anstößt.

Auf diese Weise ist es durch Betätigen von nur zwei Steuerventilen 123, 128 möglich, den Weg des Spannkolbens 25 zu verändern, je nach dem ob die Spannbacken 44 nur zum Vorschub eines bereits eingespannnten Rohres gelöst werden sollen, oder ob der Spannkolben 25 ganz zurückgezogen werden soll, um die Spannblöcke 48 an den Spannbacken 44 für die Bearbeitung eines Rohres mit einem anderen Durchmesseer auszuwechseln.

## Patentansprüche

1. Maschine zum Abstechen von Rohren und gegebenenfalls Anfasen der hierbei gebildeten Rohrstirnkanten mit einem Abstechkopf zum Einspannen eines Rohrendes aus einer mittels einer Hydraulik-Kolben-Zylinder-Einheit axial verschiebbaren Druckhülse (36) mit radialen Keilflächen (37,38) und darin konzentrisch angeordneten, axial unverschiebbaren, mittels komplementärer Keilflächen (45,46) radial zustellbaren Spannbacken (44), mit einer drehbaren Planscheibe zur Aufnahme von wenigstens zwei radial gegenüberliegenden und radial zustellbaren Abstechwerkzeugen und/oder gegebenenfalls Faswerkzeugen und gegebenenfalls mit einem Abgreifer zum Halten des abzustechenden Rohrteils aus mittels einer Hydraulik-Kolben-Zylinder-Einheit betätigbaren Spannbacken, **dadurch gekennzeichnet,** daß die Keilflächen (37, 38) der Druckhülse (36) und die komplementären Keilflächen (45, 46) der Spannbacke (44) aus mit ihren Achsen (A₂ ,A₃) gegen die Achse (A₁) der Druckhülse (36) um den Keilwinkel (α) geneigten Zylinderflächen gebildet sind.

2. Maschine nach Anspruch 1, **dadurch** **gekennzeichnet,** daß der Durchmesser (D₃) der Zylinderflächen kleiner als der Durchmesser (D₁) der Außenoberfläche der Druckhülse (36) ist.

3. Maschine nach Anspruch 2, **dadurch gekennzeichnet**, daß der Durchmesser (D₃) der Zylinderflächen kleiner als der kleinste Durchmesser (D₂) der Keilflächen (37, 38) ist.

4. Maschine nach Anspruch 2 oder 3, **dadurch** **gekennzeichnet**, daß der Keilwinkel (α) 25 beträgt.

5. Maschine nach einem oder mehreren der Ansprüche 1 bis 4, **dadurch gekennzeichnet,** daß jede Spannbacke (44) zwei axial versetzte, mit zwei entsprechend komplementären Keilflächen (37, 38) in der Druckhülse (36) zusammenwirkende, zwischen sich einen Freiraum (47) bildende Keilflächen (45, 46) aufweist.

6. Maschine nach einem oder mehreren der Ansprüche 1 bis 5, **dadurch gekennzeichnet,** daß die Keilflächen (38, 46) im Bereich des Austritts des Rohrendes axial länger sind als die diesem Bereich abgewandten Keilflächen (46) und die Spannbacken im Bereich der axial längeren Keilflächen auswechselbare, eine unterschiedliche dem Durchmesser der einzuspannenden Rohrenden angepaßte radiale Dicke aufweisende Spannblöcke (48) tragen.

7. Maschine nach einem oder mehreren der Ansprüche 1 bis 6, **dadurch gekennzeichnet,** daß gewölbte Spreizfederblätter (50) zwischen den Spannbacken (44) angeordnet sind.

8. Maschine nach einem oder mehreren der Ansprüche 1 bis 7, **dadurch gekennzeichnet,** daß zwischen den Spannbacken (44) und der Druckhülse (36) zumindest im Bereich der kürzeren Keilfläche (37, 45) unter dem Keilwinkel ( ) geneigte Rückzugführungen (133, 134) angeordnet sind.

9. Maschine nach einem oder mehreren der Ansprüche 1 bis 8, **dadurch gekennzeichnet,** daß die Hydraulik-Kolben-Zylinder-Einheit (7, 25) zum Verschieben der Druckhülse (36) einen mit der Druckhülse (36) verbundenen, doppeltwirkenden Ringkolben (28) aufweist.

10. Maschine nach Anspruch 9**, dadurch** **gekennzeichnet**, daß die wirksame Fläche der ein Spannen der Spannbacken (44) bewirkenden Kolbenseite (30) größer als die wirksame Fläche der ein Lösen der Spannbacken (44) bewirkenden Kolbenseite (31) des Ringkolbens (28) ist

11. Maschine nach Anspruch 9 oder 10, **dadurch** **gekennzeichnet,** daß der ein Lösen der Spannbacken (44) bewirkende Rückhub des Ringkolbens (28) durch einen verstellbaren Anschlag (122) begrenzt ist.

12. Maschine nach Anspruch 11, **dadurch** **gekennzeichnet,** daß der verstellbare Anschlag aus der Kolbenstange (122) einer doppeltwirkenden Hydraulik-Kolben-Zylinder-Einheit (120, 121) besteht.

13. Maschine nach Anspruch 12, **dadurch** **gekennzeichnet**, daß die Hydraulik-Kolben-Zylinder-Einheit für die Druckhülse (36) über ein Vier/Drei-Wegeventil (123) angesteuert wird, von dem ein Eingang P mit einer Druckleitung (124), ein Ausgang T mit einer Rückleitung (125), ein Ausgang A über ein Rückschlagventil (126) mit der eine größere wirksame Fläche aufweisenden Kolbenseite (35) und diese über ein steuerbares Rückschlagventil (127) mit einem dem kolbenstangenseitigen Zylinderraum (132) abgewandten Zylinderraum (131) des verstellbaren Anschlages (122) sowie direkt mit dem kolbenstangenseitigen Zylinderraum (132) des verstellbaren Anschlages (122) verbunden und ein Ausgang B mit der eine kleinere wirksame Fläche aufweisenden Kolbenseite (31) sowie mit dem Steuereingang des steuerbaren Rückschlagventils (127) verbunden ist und daß der verstellbare Anschlag (122) über ein Vier/Zwei-Wegeventil (128) angesteuert wird, von dem ein Eingang P verschlossen, ein Ausgang T mit einer Rückleitung (129), ein Ausgang A mit dem dem kolbenstangenseitigen Zylinderraum (132) abgewandten Zylinderraum (131) verbunden und ein Ausgang B verschlossen sind.

## Claims

1. A machine for cutting off pipes and possibly chamfering the resulting end faces of the pipes, with a cutting-off head for clamping a pipe end and consisting of a compression sleeve (36) adapted for axial displacement by an hydraulic piston-cylinder unit and having radial wedging surfaces (37, 38) and, disposed concentrically therein and axially non-displaceable clamping jaws (44) which are adapted to be advanced radially by means of complementary wedging surfaces (45, 46), with a rotatable face plate to accommodate at least two radially oppositely disposed and radially feedable cutting-off tools and/or possibly chamfering tools and possibly with a pick-off arrangement for gripping the piece of pipe to be cut off and consisting of clamping jaws adapted to be actuated by an hydraulic piston-cylinder unit, characterised in that the wedging surfaces (37, 38) of the compression sleeve (36) and the complementary wedging surfaces (45, 46) of the clamping jaw (44) consist of cylindrical surfaces with axes (A₂, A₃) inclined by the wedge angle (α) in respect of the axis (A₂) of the compression sleeve (36).

2. A machine according to Claim 1, characterised in that the diameter (D₃) of the cylindrical surfaces is smaller than the diameter (D₂) of the outer surface of the compression sleeve (36).

3. A machine according to Claim 2, characterised in that the diameter (D₃) of the cylindrical surfaces is smaller than the smallest diameter (D₂) of the wedging surfaces (37, 38).

4. A machine according to Claim 2 or 3, characterised in that the wedge angle (α) is 25.

5. A machine according to one or more of Claims 1 to 4, characterised in that each clamping jaw (44) has two axially offset wedging surfaces (45, 46) co-operating with two correspondingly complementary wedging surfaces (37, 38) in the compression sleeve (36) and

6. A machine according to one or more of Claims 1 to 5, characterised in that the wedging surfaces (38, 46) in the region where the pipe end emerges are axially longer than the wedging surfaces (46) remote from this region and in that the clamping jaws support in the region of the axially longer wedging surfaces interchangeable clamping blocks (48) of differing radial thickness adapted to match the diameter of the pipe ends which are to be clamped.

7. A machine according to one or more of Claims 1 to 6, characterised in that arcuately curved expanding spring plates (50) are disposed between the clamping jaws (44).

8. A machine according to one or more of Claims 1 to 7, characterised in that between the clamping jaws (44) and the compression sleeve (36), at least in the region of the shorter wedging surface (37, 45) there are retraction guides (133, 134) inclined at a wedge angle ( ).

9. A machine according to one or more of Claims 1 to 8, characterised in that for displacement of the compression sleeve (36), the hydraulic piston-cylinder unit (7, 25) has a double-acting annular piston (28) which is connected to the compression sleeve (36).

10. A machine according to Claim 9, characterised in that the effective surface area of the piston side (30) which produces clamping of the clamping jaws (44) is larger than the effective surface area of the piston side (31) of the annular piston (28) which brings about a releasing of the clamping jaws (44).

11. A machine according to Claim 9 or 10, characterised in that the return stroke of the annular piston (28) which produces a releasing of the clamping jaws (44) is limited by an adjustable stop (122).

12. A machine according to Claim 11, characterised in that the adjustable stop consists of the piston rod (122) of a double-acting hydraulic piston-cylinder unit (120, 121).

13. A machine according to Claim 12, characterised in that the hydraulic piston-cylinder unit for the compression sleeve (36) is operated by a four/three-way valve (123) of which one inlet (P) is connected to a pressure line (124), one outlet (T) is connected to a return line (125), one outlet (A) is connected via a non-return valve (126) to the side of the piston (35) which has a larger effective surface area and in that this is connected via a controllable non-return valve (127) to a cylinder space (131) of the adjustable stop (122) which is remote from the cylinder space (132) on the piston rod-side, and is connected directly to the piston rod-side cylinder space (132) of the adjustable stop (122) and in that one outlet (B) is connected to the piston side (31) which has a smaller effective surface area and to the control input of the controllable non-return valve (127) and in that the adjustable stop (122) is actuated via a four/three-way valve (128) of which one inlet (P) is occluded, one outlet (T) is connected to a return line (129), one outlet (A) is connected to the cylinder space (131) remote from the piston rod-side cylinder space (132) while one outlet (B) is occluded.

## Revendications

1. Machine destinée à tronçonner des tubes et éventuellement chanfreiner les bords frontaux du tube ainsi formés comportant une tête à tronçonner destinée à serrer une extrémité du tube, constituée d'un manchon de pression (36), coulissant axialement au moyen d'une unité hydraulique à cylindre et piston avec des surfaces en coin (37, 38) radiales et des mâchoires de serrage (44) placées concentriquement à l'intérieur de celui-ci, non déplaçables axialement, ajustables radialement au moyen de surfaces en coin (45, 46) complémentaires, comportant un disque plan tournant destiné à loger au moins deux outils à tronçonner se faisant face radialement et ajustables radialement et/ou éventuellement des outils à chanfreiner et comportant éventuellement un organe de prélèvement destiné à maintenir la partie de tube à tronçonner, constitué de mâchoires de serrage actionnées au moyen d'une unité hydraulique à cylindre et piston, caractérisée en ce que les surfaces en coin (37, 38) du manchon de pression (36) et les surfaces en coin (45, 46) complémentaires de la mâchoire de serrage (44) sont formées de surfaces cylindriques dont les axes (A₂, A₃) sont inclinées de l'angle (α) par rapport à l'axe (A₁) du manchon de pression (36).

2. Machine selon la revendication 1, caractérisée en ce que le diamètre (D₃) des surfaces cylindriques est inférieur au diamètre (D₁) de la surface extérieure du manchon de pression (36).

3. Machine selon la revendication 2, caractérisée en ce que le diamètre (D₃) des surfaces cylindriques est inférieur au plus petit diamètre (D₂) des surfaces en coin (37, 38).

4. Machine selon la revendication 2 ou 3, caractérisée en ce que l'angle (α) est égal à 25°.

5. Machine selon une ou plusieurs des revendications 1 à 4, caractérisée en ce que chaque mâchoire de serrage (44) comporte deux surfaces en coin (45, 46) décalées axialement, formant entre elles un espace libre (47), coopérant avec deux surfaces en coin (37, 38) complémentaires dans le manchon de pression (36).

6. Machine selon une ou plusieurs des revendications 1 à 5, caractérisée en ce que les surfaces en coin (38, 46) sont plus longues axialement dans la zone de sortie de l'extrémité du tube que les surfaces en coin (46), tournées à l'opposé de cette zone, et en ce que les mâchoires de serrage portent dans la zone des surfaces en coin plus longues axialement des blocs de serrage (48) interchangeables, présentant une épaisseur radiale différente, adaptée au diamètre des extrémités de tube à serrer.

7. Machine selon une ou plusieurs des revendications 1 à 6, caractérisée en ce que des lames de ressort d'écartement (50) bombées sont prévues entre les mâchoires de serrage (44).

8. Machine selon une ou plusieurs des revendications 1 à 7, caractérisée en ce que des organes de guidage de retour (133, 134), inclinés de l'angle (α), sont prévus entre les mâchoires de serrage (44) et le manchon de pression (36), au moins dans la zone de la surface en coin (37, 45) plus courte.

9. Machine selon une ou plusieurs des revendications 1 à 8, caractérisée en ce que l'unité hydraulique à cylindre et piston (7, 25) destinée au coulissement du manchon de pression (36), comporte un piston annulaire (28) à double effet, relié au manchon de pression (36).

10. Machine selon la revendication 9, caractérisée en ce que la surface utile du côté (30) du piston provoquant un serrage des mâchoires de serrage (44), est plus grande que la surface utile du côté (31) du piston annulaire (28), provoquant un desserrage des mâchoires de serrage (44).

11. Machine selon la revendication 9 ou 10, caractérisée en ce que la course de retour du piston annulaire (28), provoquant un desserrage des mâchoires de serrage (44), est limitée par une butée (122) réglable.

12. Machine selon la revendication 11, caractérisée en ce que la butée réglable est constituée par la tige de piston (122) d'une unité hydraulique à cylindre et piston (120, 121) à double effet.

13. Machine selon la revendication 12, caractérisée en ce que l'unité hydraulique à cylindre et piston pour le manchon de pression (36) est commandée par l'intermédiaire d'une vanne à quatre/trois voies (123), dont une entrée P est reliée avec une conduite de pression (124), une sortie T avec une conduite de retour (125), une sortie A avec le côté (35) du piston présentant une plus grande surface utile, par l'intermédiaire d'un clapet de non-retour (126), et ce côté (35) du piston avec une chambre de cylindre (131), tournée à l'opposé de la chambre de cylindre (132) côté tige de piston, de la butée (122) réglable, par l'intermédiaire d'un clapet de non-retour (127) commandé, ainsi que directement avec la chambre de cylindre (132) côté tige de piston de la butée (122) réglable et une sortie B est reliée avec le côté (31) du piston, présentant une plus petite surface utile ainsi qu'avec l'entrée de commande du clapet de non-retour (127) commandé et en ce que la butée (122) réglable est commandée par l'intermédiaire d'une vanne à quatre/deux voies (128), dont une entrée P est fermée, une sortie T est reliée avec une conduite de retour (129), une sortie A avec la chambre de cylindre (131) tournée à l'opposé de la chambre de cylindre (132) côté tige de piston et une sortie D est fermée.
